# EUROPÄISCHE PATENTANMELDUNG

(11) **EP 0 565 018 A2**
(43) Veröffentlichungstag der Anmeldung: **13.10.1993**
(21) Anmeldenummer: 93105588.3
(22) Anmeldetag: 05.04.1993
(51) Int. Cl.: B65D 81/02, D21J 7/00

(54) **Verpackungsbehälter**

(30) Priorität: 07.04.1992 DE 9204795 U; 16.03.1993 DE 9303808 U
(71) Anmelder: VIESSMANN GmbH & Co, D-95030 Hof (DE)
(72) Erfinder: Viessmann, Hans, Dr., W-3559 Battenberg/Eder (DE)
(74) Vertreter: Wolf, Günter, Dipl.-Ing.

(57) **Zusammenfassung**

Die Erfindung betrifft einen Verpackungsbehälter, bestehend aus einem im Saugformverfahren verfestigten und aus Altpapier- und/oder Kartonagenabfällen gebildeten, schalenförmigen Unterteil (1) und aus einem entsprechend schalenförmigen Oberteil (2), wobei die Großflächen (4) der Teile (1, 2) zur Ausbildung mindestens eines Aufnahmeraumes (5) für den mindestens einen zu umschließenden Verpackungsgegenstand mit Formeintiefungen (6) versehen sind. Zur Lösung der Aufgabe, einen Verpackungsbehälter dahingehend zu verbessern und umzugestalten, daß dieser für einen umhüllungslosen Versand geeignet ist, keine frei abragenden Flanken aufweisen soll und die zu umschließenden Gegenstände schonender und bis zu einem gewissen Grade abgepolstert darin aufnehmbar sein sollen, ist der Verpackungsbehälter derart ausgebildet, daß die Formeintiefungen (6) und die mit ihren Rändern (3') am geschlossenen Behälter aneinanderliegenden Flankenwände (3) der Teile (1, 2) mit ihren weich-rauhen Seiten ihrer Oberflächen in den Innenraum des Behälters gerichtet angeordnet sind.

## Beschreibung

Die Erfindung betrifft einen Verpackungsbehälter gemäß Oberbegriff des Patentanspruches 1.

Aus Formstücken gebildete Verpackungsbehälter sind für Verpackungszwecke allgemein bekannt und in den unterschiedlichsten Formen, insbesondere was die Formeintiefungen betrifft, für den genannten Zweck in Benutzung. Siehe hierzu bspw. DE-U-87 14 602 und US-A-3 135 450.

Bei bis heute in der Mehrzahl für solche in Benutzung befindliche Formstücke verwendetem Material handelt es sich allerdings um geblähten, etwa kugelförmig strukturierten, außerordentlich leichten Kunststoff.

Als Ersatz für derartige, in angepaßte Kartonagen einbringbare Kunststofformstücke sind deshalb nach dem vorerwähnten DE-U-87 14 602 Verpackungsformstücke der eingangs genannten Art aus einem schalenförmigen Formkörper mit einseitiger, der Form des Gegenstandes angepaßter, mindestens eineer Formeintiefung vorgeschlagen worden, wobei der aus weitgehend aufgelösten Papierabfallschnitzeln bestehende Formkörper auf der Formeintiefungsseite mit einer weitgehend glatten, feinsiebartig strukturierten und relativ harten Oberfläche und auf der anderen Seite, die Formkörperoberflächenkontur im wesentlichen wiederholend grob formangepaßt ausgebildet ist. Unter "weitgehend glatter Oberfläche" ist dabei eine Strukturierung zu verstehen, die sich durch die Anlage der ersten Faserschichten am Ausformsieb ergibt. Ferner ist unter "auf der anderen Seite grob formangepaßt" beim vorbekannten Formkörper zu verstehen, daß sich auf der anderen Seite, also auf der Außenseite, die nicht am zu umhüllenden Gegenstand zur Anlage kommt, zwar die Formgestalt der Anlageseite wiederholt, diese aber so belassen ist, wie sie sich ergibt, wenn der Saugverfestigungsvorgang abgebrochen wird. Diese Seite ist bedingt durch die Art der speziellen Herstellung weicher als die glatte Oberfläche.

Für Versandzwecke, und zwar ohne dafür Umhüllungskartonagen benutzen zu müssen, die die anfallende Altpapierflut noch vergrößern, sind solche Formstücke nach dem genannten DE-U-87 14 602 nicht ohne weiteres geeignet, da die rauhen, nach außen gewandten Flächen für einen umhüllungslosen Versand denkbar ungeeignet sind und die Flankenwände der Formstücke bei Zusammenstellung frei nach außen ragen und der Bruchgefahr unterliegen. Unter Versand ist dabei sowohl Postversand in Einzelstücken, aber auch bspw. Transport auf Paletten in gestapelter Vielzahl zu verstehen.

In diesem Zusammenhang sei darauf hingewiesen, daß Verpackungsbehälter oder Verpackungsschalen, die ebenfalls im Saugverfahren, aber aus einer total in Einzelfasern aufgelösten Pulpe hergestellt werden, was einen entsprechenden Aufbereitungsaufwand verlangt, nicht mit Formstücken der vorliegenden Art aus Altpapier- bzw. Kartonagenabfällen vergleichbar sind, da solche aus Pulpe hergestellten Verpackungsbehälter, also bspw. Eierkistchen, bei weitem nicht derartig unterschiedlich strukturierte äußere und innere Obeflächen aufweisen.

Der Erfindung liegt deshalb, ausgehend von Formstücken der eingangs genannten Art die Aufgabe zugrunde, einen Verpackungsbehälter dahingehend zu verbessern und umzugestalten, daß dieser für einen umhüllungslosen Versand geeignet ist, keine frei abragenden Flanken aufweisen soll und die zu umschließenden Gegenstände schonender und bis zu einem gewissen Grade abgepolstert darin aufnehmbar sein sollen.

Diese Aufgabe ist mit einem Verpackungsbehälter der eingangs genannten Art nach der Erfindung dadurch gelöst, daß die Formeintiefungen und die mit ihren Rändern am geschlossenen Behälter aneinanderliegenden Flankenwände der Formkörper mit ihren weich-rauhen Seiten ihrer Oberfläche in den Innenraum des Verpackungsbehälters gerichtet angeordnet sind.

Es ist zwar bekannt, sogenannte Eierkästchen oder Behälter nach US-A-3 135 450 aus Holzschliff- od. dgl. Fasermaterial herzustellen, diese Verpackungsbehälter sind aber formgepreßt und weisen relativ dünne Wände auf, wobei die erforderliche Stabilität nur durch die Formgebung des ganzen Kästchens erzielt wird, die sich durch der Eiform angepaßte, mehrfache Positiv- und Negativprägungen ergibt. Für Verpackungs- und Versandzwecke der vorliegenden Art sind diese Eierkästchen schon deshalb nicht geeignet, abgesehen davon, daß für solche Kästchen insoweit anderes Material (voll aufgeschlossene Faserpulpe) verwendet wird, das wesentlich aufwendiger vorbereitet werden muß, um auch äußerlich ansprechende Verpackungen zu erzielen.

Die erfindungsgemäße Lösung erscheint zwar einerseits sehr einfach, andererseits wird aber ohne Zusatzmaßnahmen durch die Umkehrung der Oberflächen, nämlich weich-rauhe Seiten nach innen und glatte relativ harte Seiten nach außen, ein Zweifaches erreicht, nämlich bis zu einem gewissen Grade abgepolsterte Lagerung des bzw. der Gegenstände im Verpackungsbehälter und gleichzeitig eine glatte und insbesondere abriebfeste Oberfläche nach außen, die einem solchen Verpackungsbehälter Post- bzw. Versandakzeptanz verschafft, ohne daß ein solcher Behälter in einen zusätzlichen Umkarton gesteckt werden muß, wie das bei dem Formstück nach dem DE-U-87 14 602 notwendig wäre, wollte man einen daraus gebildeten Behälter direkt versenden.

Verpackungsbehälter mit äußerer glatter Oberfläche sind zwar schon nach der EP 92 105 701 vorgeschlagen worden, was aber hierbei nur durch Zusatzmaßnahmen erreicht wird und wobei auch die in den Behälterinnenraum weisenden Flächen glatt und hart sind.

Da erfindungsgemäß beim vorliegenden Verpackungsbehälter die weich-rauhen Oberflächen nach innen weisen, wären Flankenwandabkröpfungen, um die beiden einen Behälter bildenden Teile gegen Quer- und Längsverschiebungen zu sichern, ungünstig, da hierbei immer eine rauhe, nicht formgenaue Abkröpfungsfläche zum Eingriff mit der anderen Abkröpfung zu bringen wäre. Abgesehen davon würden solche Randabkröpfungen unterschiedliche Saugformwerkzeuge verlangen, da solche Randabkröpfungen nicht formidentisch ausgebildet sein können. Eine vorteilhafte Weiterbildung besteht demgemäß darin, daß die beiden Teile formidentisch ausgebildet sind und an gleichen Stellen von die Formeintiefungen begrenzenden Stegen Quer- und Längsverriegelungsfortsätze und dazu formentsprechende Quer- und Längsverriegelungseintiefungen an in bezug auf eine der Mittellängsachsen der Teile symmetrischen Stellen angeordnet sind, wobei die Fortsätze die Ebene überragen, in der sich die freien Ränder der Flankenwände erstrecken. Durch diese Ausbildung können die beiden absolut identischen Gebindehälften zusammengefügt werden und liegen dabei gegen Quer- und Längsverschiebungen gesichert aufeinander. Eine solche Quer- und Längsverschiebungssicherung mit nur einem Fortsatz im einen und nur einer entsprechenden Eintiefung im anderen Teil erreichen zu wollen, ist nicht möglich, weil dann keine Formidentität mehr gegeben wäre, und solche Teile ebenfalls mit entsprechend unterschiedlichen Formwerkzeugen hergestellt werden müßten.

Weitere vorteilhafte Ausgestaltungen bestehen in Folgendem: Die beiden Teile sind in je einer formidentischen aber formeintiefungsfreien Schale aus dem gleichen Material eingelassen angeordnet, deren glatte Flächen die äußere Oberfläche bilden, wobei zudem die Teile mit ihren aufgestülpten Schalen mindestens punktuell verklebt sein können.

Dadurch sind die nach außen offenen Negativ formeintiefungen verschlossen und außerdem enthält dadurch der Verpackungsbehälter eine wesentlich erhöhte Festigkeit.

Mit dem praktisch gleichen Ergebnis ist es aber auch möglich, in den Großflächen der Teile eine Eintiefung anzuordnen und in dieser eine die Negativformeintiefungen abdeckende Deckplatte aus dem gleichen Material einzusetzen und diese mindestens punktuell mit dem jeweiligen Teil zu verkleben.

Der erfindungsgemäße Verpackungsbehälter wird nachfolgend anhand der zeichnerischen Darstellung von Ausführungsbeispielen näher erläutert.

Es zeigt schematisch
- Fig. 1: einen Schnitt durch eine Ausführungsform des Verpackungsbehälters;
- Fig. 2: perspektivisch und im Schnitt eine besondere Ausführungsform der den Verpackungsbehälter bildenden Formteile;
- Fig. 3: perspektivisch den Verpackungsbehälter gemäß Fig. 2 in besonderer Ausführungsform;
- Fig. 4: perspektivisch und nebeneinander das Ober- und Unterteil in einer weiteren besonderen Ausführungsform;
- Fig. 5: perspektivisch die beiden Formteile gemäß Fig. 4 beim Zusammenlegen;
- Fig. 6: einen Schnitt durch die beiden zusammenzufügenden Formteile gemäß Fig. 4, 5 und
- Fig. 7: einen Schnitt durch die beiden zusammengefügten Formteile in einer weiteren Ausführungsform.

DerVerpackungsbehälter besteht aus den Behälterinnenraum begrenzenden Formkörpern, die aus im Saugverfahren ausgeformten Altpapier- und/oder Kartonagenschnitzeln gebildet sind.

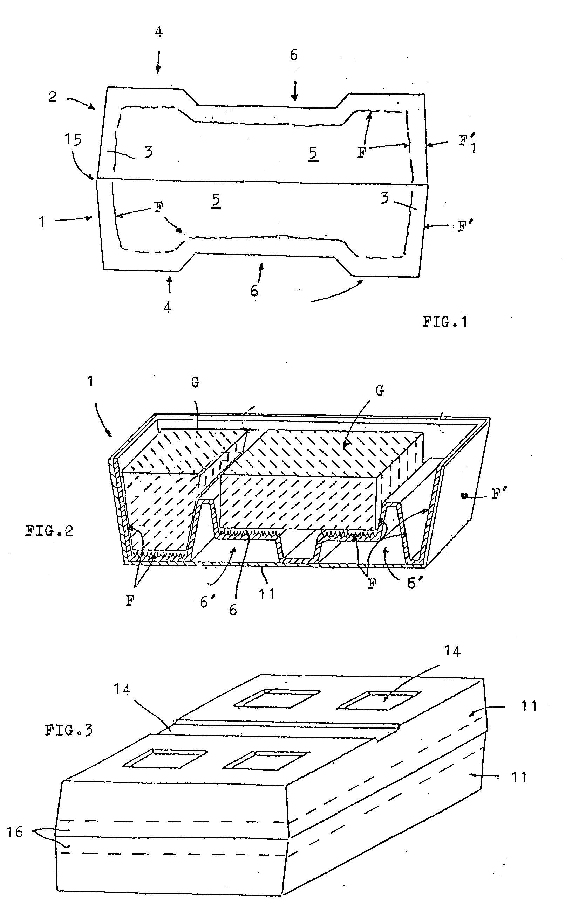

Dieses spezielle Herstellungsverfahren bedarf keiner näheren Erläuterung, da allgemein bekannt. Für einen solchen Verpackungsbehälter ist nun unter Bezug auf Fig. 1 wesentlich, daß der Behälter aus zwei, ein schalenförmiges Unterteil 1 und ein entsprechend schalenförmiges Oberteil 2 bildenden und mit ihren Flankenwänden 3 gegeneinander gerichteten Formkörpern gebildet ist, wobei deren weich-rauhe Flächen F die Innenflächen des Behälters bilden. Bevorzugt werden natürlich Unter- und Oberteil 1, 2 formidentisch ausgebildet, da dafür die gleiche Saugform benutzt werden kann. Da sich die beiden Teile 1, 2 im zusammengefügten Zustand (siehe Fig. 1, 3) zumindest bezüglich ihrer Flankenwände 3 gegenseitig abstützen, unterliegen diese auch nicht mehr der Bruchgefahr. Da ferner derartige Behälter insbesondere für die Verpackung großer Stückzahlen gleicher Gegenstände vorgesehen sind, werden die Teile 1, 2 in Form und Größe an diese Gegenstände angepaßt, d.h., die Teile 1, 2 werden so ausgeformt, daß die rauhen und relativ weichen Innenflächen F zumindest in Teilbereichen gerade am Gegenstand G (siehe Fig. 2) anliegen. Dargestellt ist in Fig. 2 nur das Unterteil 1, und die Gegenstände G sind doppelt so groß wie dargestellt sich vorzustellen, da ja das Unterteil 2 noch darüberzustülpen ist.

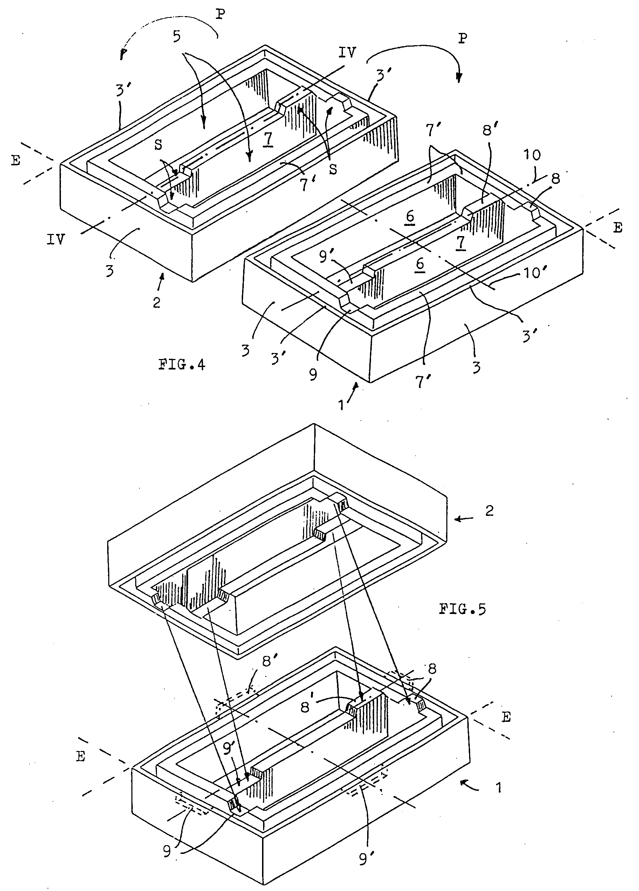

Beim besonderen Ausführungsbeispiel nach Fig. 2, aber auch nach Fig. 4 bis 6, handelt es sich um Verpackungsbehälter mit extrem nach innen gerichteten Formeintiefungen 6, die auf der Außenseite des Behälters zu entsprechenden und nach außen offenen Negativformeintiefungen 6' führen. Um solche offenen Negativformeintiefungen 6' für den Versand zu vermeiden, ist vorgesehen, beide Teile 1, 2 mit einer entsprechend hergestellten und angepaßten Schale 11 zu versehen, mit der die Negativeintiefungen 6' abgedeckt sind. Diese Schalen 11 können ohne weiteres in der Wandstärke dünner bemessen sein, als die Teile 1, 2.

Möglich ist aber auch, in den Großflächen 4 der Teile 1, 2 eine Eintiefung 12 anzuordnen und in dieser eine die Negativformeintiefungen 6' abdeckende Deckplatte 13 aus dem gleichen Material einzusetzen und diese mindestens punktuell mit dem jeweiligen Teil 1, 2 zu verkleben, wie dies in Fig. 7 dargestellt ist. Bei beiden Ausführungsformen können dabei in den Schalen 11 oder den Deckplatten 13 Formeintiefungen 14 zur Anordnung von Verschlußhilfsmitteln angeordnet sein, wie dies für Schalen 11 in Fig. 3 verdeutlicht ist.

Auch bei der besonderen und bevorzugten Ausführungsform nach Fig. 4 bis 6 sind die weich-rauhen Oberflächen der Teile 1, 2 in den Innenraum bzw. den Aufnahmeraum des Behälters gerichtet. Wesentlich ist dabei, daß die beiden Teile 1, 2 form- und größenidentisch ausgebildet sind und an gleichen Stellen von die Formeintiefungen 6 begrenzenden Stegen 7 Quer- und Längsverriegelungsfortsätze 8, 8' und dazu formentsprechende Quer- und Längsverriegelungseintiefungen 9, 9' an in bezug auf eine der Mittellängsachsen 10, 10' der Teile 1, 2 symmetrischen Stellen angeordnet sind, wobei die Fortsätze die Ebene E überragen, in der sich die freien Ränder 3' der Flankenwände 3 erstrecken. Die dargestellten Stege 7 müssen dabei keineswegs, wie dargestellt, durchlaufend ausgebildet sein und bspw. können auch die anderen, die Formeintiefungen 6 begrenzenden Stege 7' andere Gestaltung und Verläufe aufweisen. Gleiches gilt auch für die mit 4 bezeichneten Großflächen. Eines der in Fig. 4 noch nebeneinanderliegend dargestellten Formteile muß zum Zusammenfügen beider Formteile nur entsprechend um 180° aus der Darstellungsebene heraus in Richtung der Pfeile P gewendet werden und kann dann, wie aus Fig. 5 ersichtlich, auf das Unterteil 1 aufgesetzt werden, wobei gegenseitig die Quer- und Längsverriegelungsfortsätze 8, 8' in die Quer- und Längsverriegelungseintiefungen 9, 9' des jeweils anderen Teiles eingreifen.

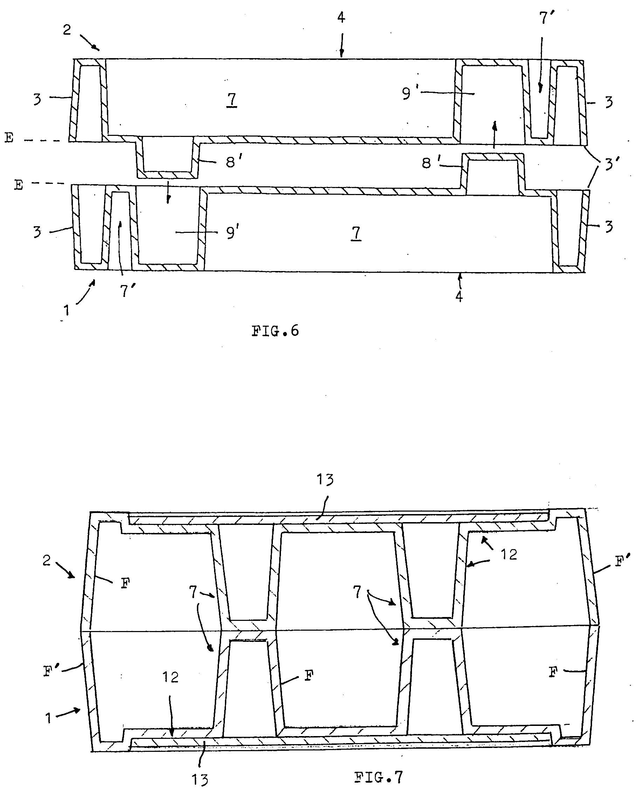

Auch die dargestellten Anordnungsplätze der Stellen S ist nicht verbindlich, d.h., diese Stellen S könnten bspw. auch im Bereich der Längsmittelachsen 10' vorgesehen werden. Wesentlich ist immer nur, daß Zuordnungssymmetrie gegeben ist. Die geradlinigen Pfeile in Fig. 5 verdeutlichen lediglich, wo was beim Zusammenfügen hingehört. Dies gilt auch für Fig. 6, die Schnitte durch die formidentischen Unter- und Oberteile 1, 2 darstellt, wobei diese Schnitte längs der Linien IV-IV in Fig. 4 geführt sind. Für Schnitte parallel zur Achse 10' würden sich dem Prinzip nach und, wie ohne weiteres vorstellbar, entsprechende Darstellungen ergeben.

Bei eingelegten Verpackungsgegenständen in die Formeintiefungen 6 des Unterteiles 1 und nach Überstülpung des Oberteiles 2 wird dann der ganze Behälter längs der Stoßfuge 15 bspw. mit einem Klebeband 16 umspannt und verschlossen. Eines zusätzlichen Umkartons bedarf es dabei nicht, da die Formteile zumindest für einen Einmaltransport ausreichende Festigkeit haben.

Die Quer- und Längsverriegelungsfortsätze 8, 8' und die Quer- und Längsverriegelungseintiefungen 9, 9' könnten übrigens auch unter Einhaltung der Mittelachssymmetrie an bzw. in den Flankenwänden 3 vorgesehen werden, wie dies gestrichelt an einem der Formstücke in Fig. 5 angedeutet ist. Dies ist allerdings nicht so günstig wie die vorbeschriebene Ausführungsform, da hierbei die Fortsätze 8, 8' und die Eintiefungen 9, 9' nur die Wandstärke der Flankenwände 3 haben können.

## Patentansprüche

1. Verpackungsbehälter, bestehend aus einem im Saugformverfahren verfestigten und aus Altpapier- und/oder Kartonagenabfällen gebildeten, schalenförmigen Unterteil (1) und aus einem entsprechend schalenförmigen Oberteil (2), wobei die Großflächen (4) der Teile (1, 2) zur Ausbildung mindestens eines Aufnahmeraumes (5) für den mindestens einen zu umschließenden Verpackungsgegenstand mit Formeintiefungen (6) versehen sind,
**dadurch gekennzeichnet,**
daß die Formeintiefungen (6) und die mit ihren Rändern (3') am Behälter aneinanderliegenden Flankenwände (3) der Teile (1, 2) mit ihren weich-rauhen Seiten ihrer Oberflächen in den Innenraum des Behälters gerichtet angeordnet sind.

2. Behälter nach Anspruch 1,
**dadurch gekennzeichnet,**
daß die beiden Teile (1, 2) formidentisch ausgebildet sind und an gleichen Stellen von die Formeintiefungen (6) begrenzenden Stegen (7) Quer- und Längsverriegelungsfortsätze (8, 8') und dazu formentsprechende Quer- und Längsverriegelungseintiefungen (9, 9') an in bezug auf eine der Mittellängsachse (10, 10') der Teile (1, 2) symmetrischen Stellen angeordnet sind, wobei die Fortsätze (8, 8') die Ebene (E) überragen, in der sich die freien Ränder (3') der Flankenwände (3) erstrecken.

3. Behälter nach Anspruch 1 oder 2,
**dadurch gekennzeichnet,**
daß die beiden Teile (1, 2) in je eine formidentische aber formeintiefungsfreie Schale (11) aus dem gleichen Material eingelassen angeordnet sind, deren glatte Flächen (F') die äußere Oberfläche des Behälters bilden.

4. Behälter nach Anspruch 3,
**dadurch gekennzeichnet,**
daß die Teile (1, 2) mit ihren aufgestülpten Schalen (11) mindestens punktuell verklebt sind.

5. Behälter nach Anspruch 1 oder 2,
**dadurch gekennzeichnet,**
daß in den Großflächen (4) der Teile (1, 2) eine Eintiefung (12) angeordnet und in dieser eine die Negativformeintiefungen (6') abdeckende Deckplatte (13) aus dem gleichen Material eingesetzt und diese mindestens punktuell mit dem jeweiligen Teil (1, 2) verklebt ist.

6. Behälter nach einem der Ansprüche 3 bis 5,
**dadurch gekennzeichnet,**
daß in den Schalen (11) oder den Deckplatten (13) Formeintiefungen (14) zur Anordnung von Anschriftenaufklebern und/oder zur Anbringung von Verschlußhilfsmitteln angeordnet sind.
